# EUROPEAN PATENT APPLICATION

(11) **EP 4 757 145 A1**
(43) Date of publication of application: **10.06.2026**
(21) Application number: 24849319.9
(22) Date of filing: 20.03.2024
(51) Int. Cl.: H02K 15/02, H01F 41/02, B21D 28/02, B21D 39/03, B05C 5/02, B05D 5/10

(54) **LAMINATED CORE MANUFACTURING SYSTEM AND LAMINATED CORE MANUFACTURING METHOD**

(30) Priority: 31.07.2023 KR 20230099977
(71) Applicant: Posco Mobility Solution Corporation, Cheonan-si, Chungcheongnam-do 31032 (KR)
(72) Inventor: KANG, Sukjo, Asan-si, Chungcheongnam-do 31417 (KR); WOO, Dukkyoun, Cheonan-si, Chungcheongnam-do 31166 (KR); CHI, Junggyu, Cheonan-si, Chungcheongnam-do 31050 (KR); PARK, Changdon, Cheonan-si, Chungcheongnam-do 31158 (KR); HONG, Igyeong, Pyeongtaek-si, Gyeonggi-do 17845 (KR); CHAE, Subeom, Cheonan-si, Chungcheongnam-do 31032 (KR); LEE, Jeongil, Asan-si, Chungcheongnam-do 31467 (KR); KIM, Yeeun, Cheonan-si, Chungcheongnam-do 31031 (KR); LEE, Yagob, Cheonan-si, Chungcheongnam-do 31185 (KR); SEO, Seongmin, Seoul 02176 (KR); KANG, Taeho, Cheonan-si, Chungcheongnam-do 31156 (KR); NAM, Kitaek, Pyeongtaek-si, Gyeonggi-do 17785 (KR); KIM, Geunyoung, Asan-si, Chungcheongnam-do 31473 (KR); OH, Jiyoung, Asan-si, Chungcheongnam-do 31516 (KR)
(74) Representative: IPAZ
(86) International application number: PCT/KR2024/003491
(87) International publication number: WO 2025/028746

(57) **Abstract**

Disclosed are a laminated core manufacturing system and a method for manufacturing a laminated core. The laminated core manufacturing system includes: a main applicator configured to apply a main component for a two-component adhesive to a first surface of a strip intermittently transferred; a curing applicator configured to apply a hardener for the two-component adhesive to a second surface of the strip, and provided at a first position facing the main applicator or a second position shifted by a predetermined distance from the first position along the transfer direction of the strip; a blanking punch elevatably provided at a location spaced from the main applicator and the curing applicator along the transfer direction of the strip, for sequentially forming laminas by blanking regions where the main component and hardener separated by the strip are applied; a stacking die provided under the blanking punch for receiving and stacking the laminas formed sequentially by the blanking punch; and a core press for applying pressure to a laminated core discharged from the stacking die.

## Description

### [Technical Field]

The present invention relates to a core manufacturing apparatus for manufacturing cores for motors or generators, and more specifically, to a laminated core manufacturing system and a laminated core manufacturing method for manufacturing laminated cores by bonding laminas.

### [Background Art]

Generally, examples of motor cores include rotor cores and stator cores. Recently, laminated cores, which are formed by laminating and integrating thin plates, i.e., laminas having a predetermined shape are used as motor cores.

As methods of manufacturing the laminated core by laminating and integrating the laminas for forming the laminated core, there are known methods such as a tab fixing method using continuous coupling between interlocking tabs, i.e., embossed protrusions, a welding method using welding such as laser welding, and a riveting method.

To manufacture a laminated core using the tab fixing method, the lamina has an embossed protrusion (also called as an interlock tab or a caulking protrusion) formed on the lamina, by pressing one side and protruding to the other side.

A bonding method coupling the laminas using an adhesive is known as another example of manufacturing the laminated core. For instance, Japanese Laid-Open Patent Application No. 2009-297758 discloses an invention applying an adhesive a surface of a metal strip supplied to a device (die), blanking the metal strip, and forming the laminated core.

In a lamination die where the laminas are laminated, a heater such as a high-frequency induction heating device is provided to heat the adhesive at the interface of the laminas for bonding. However, heating the lamination die and its peripheral devices by the heater may cause the precision of the die to deteriorate, and thermal expansion of the laminas may cause the quality (flatness, parallelism, etc.) of the laminated core to be degraded.

### [Disclosure]

### [Technical Problem]

It is an object of the present invention to provide a laminated core manufacturing system and a laminated core manufacturing method applying a first component of a two-component type adhesive to a first surface of the material, applying a second component to a second surface of the material, and bonding the interfaces of the laminas formed by blanking so as to form the laminated core.

### [Technical Solution]

An aspect of the present invention provides a laminated core manufacturing system comprises: a main applicator configured to apply a main component for a two-component adhesive to a first surface of a strip intermittently transferred; a curing applicator configured to apply a hardener for the two-component adhesive to a second surface of the strip, and provided at a first position facing the main applicator or a second position shifted by a predetermined distance from the first position along the transfer direction of the strip; a blanking punch elevatably provided at a location spaced from the main applicator and the curing applicator along the transfer direction of the strip, for sequentially forming laminas by blanking regions where the main component and hardener separated by the strip are applied; a stacking die provided under the blanking punch for receiving and stacking the laminas formed sequentially by the blanking punch; and a core press for applying pressure to a laminated core discharged from the stacking die.

Of the main applicator and the curing applicator, one may be provided at an upper die of a press die, and the other may be provided at a lower die of the press die; the blanking punch may be provided at the upper die; and the stacking die may be provided at the lower die.

Another aspect of the present invention provides a laminated core manufacturing method using a press die, the press die configured to apply a main component for a two-component adhesive to a first surface of a strip intermittently transferred and apply a hardener to a second surface of the strip, and to sequentially form laminas by blanking. The blanking process includes blanking regions where the main component and hardener separated by the strip are applied for mixing the main component and hardener at the interface of the laminas, and sequentially forming the laminas for stacking the laminas into a stacking die.

It is preferable that the main component is applied to a position which overlaps with the application position of the hardener, for the smooth reaction of the main component and hardener. The laminated core manufacturing method may further include a pressing step of pressing the laminated core discharged from the stacking die.

### [Advantageous Effects]

The laminated core manufacturing system and the laminated core manufacturing method according to the present invention have the following advantages.

First, according to the present invention, a heater such as a high-frequency induction heating device for curing the adhesive can be omitted, and SPM (strokes per minute) of the press die can be increased. As a result, the manufacturing cost of the laminated core manufacturing apparatus can be reduced, and productivity can be improved.

Second, according to the present invention, since the main component and hardener of the two-component adhesive are separately applied on one surface and the other surface of the strip, and react when the laminas formed by blanking are stacked, sufficient pot life can be secured. Furthermore, the quality such as flatness and parallelism, etc., of the laminated core can be improved through the pressing of the laminated core.

### [Description of Drawings]

The present invention can be well appreciated with reference to drawings described below jointly with a detailed description for exemplary embodiments of the present invention to be described below, in which:
FIG. 1 is a perspective view illustrating examples of a lamina and a laminated core;
FIG. 2 shows an embodiment of a laminated core manufacturing system according to the present invention;
FIG. 3 shows positions of a main component and a hardener for a two-component adhesive applied separately on an upper surface and a lower surface of the strip by the laminated core manufacturing system shown in FIG. 2;
FIG. 4 shows the main component and the hardener interposed at the interface between the laminas manufactured by the laminated core manufacturing system shown in FIG. 2;
FIG. 5 shows an embodiment of a core jig for a pressing process and an example of a laminated core loaded in the core jig; and
FIGS. 6 and 7 show additional embodiments of a progressive die for the laminated core manufacturing system according to the present invention.

### [Best Mode]

Hereinafter, preferred embodiments of the present invention are described with reference to the accompanying drawings. In describing the embodiments, the same name and the same reference numeral are used with respect to the same element and repetitive description thereto will be omitted. And the descriptions of technologies well known in the art are omitted.

The terms used herein are used to explain embodiments of the present invention. And when an element is mentioned as "connected" to other element, although it may be directly connected, it should be understood that it also includes a relationship with another element therebetween, that is, a relationship of indirect connection.

It should be understood that term "include" or "have" described in this specification not exclude a possibility of presence or addition of one or more other features or elements which is not mentioned in this specification.

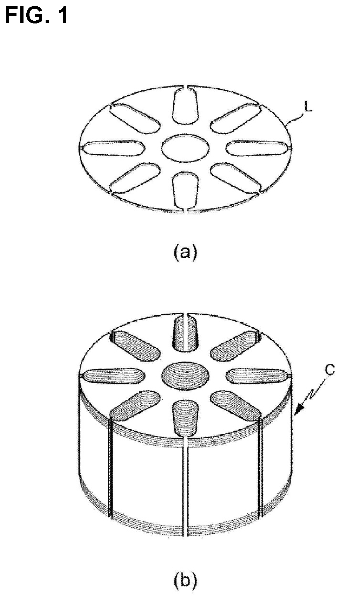

With reference to FIGS. 1 to 5, an embodiment (First Embodiment) of the laminated core manufacturing system according to the present invention will be described.

Referring to FIGS. 1 to 5, the first embodiment of the laminated core manufacturing system is an apparatus for manufacturing a laminated core C having a structure in which laminas L are stacked and integrated by bonding.

The laminated core manufacturing system sequentially may form the laminas L by blanking on a strip-shaped material (S) transferred intermittently, and manufacture the laminated core C by bonding the interfaces of the laminas.

A particular example of the laminated core manufacturing system may include a press die, more particularly a progressive die, that applies a main component and a hardener for a two-component adhesive to a metal strip such as an electrical steel sheet, and sequentially forms and stacks laminas by the blanking.

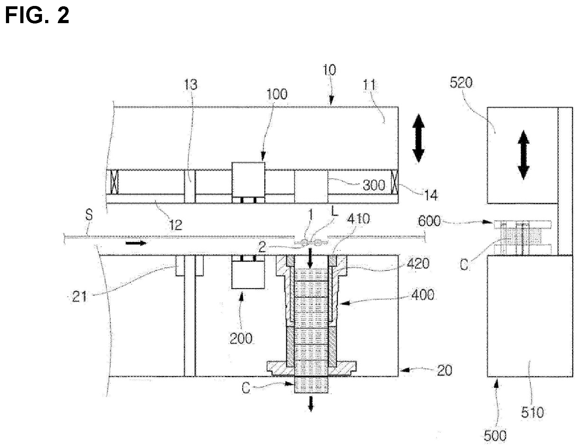

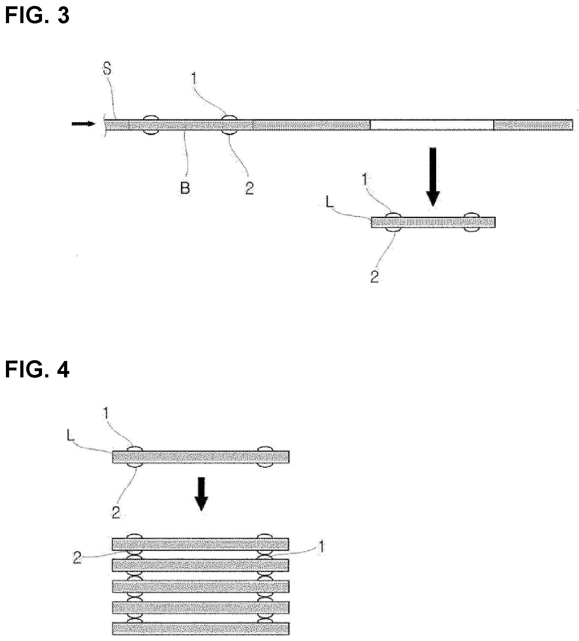

Referring to FIGS. 2 and 3, the system includes a main applicator 100 configured to apply the main component to the strip S for bonding the laminas L which form the laminated core C, a curing applicator 200 configured to apply the hardener to the strip, a blanking punch 300 for sequentially forming the laminas by punching the strip, and a stacking die 400 in which the laminas are stacked. The system may further include a core press 500 for pressing the laminated core taken out from the stacking die 400.

The main applicator 100 is connected to a main component supply unit, and the curing applicator 200 is connected to a hardener supply unit. Depending on the type of the two-component adhesive formed by the main component and the hardener, the ratio of the main component to the hardener applied to the strip may be controlled.

The main applicator 100 applies the main component to a first surface of both surfaces of the strip S. For example, the main component is applied to an upper surface or a lower surface of the strip. The curing applicator 200 applies the hardener to a second surface opposite to the first surface where the main component is applied.

Therefore, when the main component is applied to the upper surface of the strip, the hardener is applied to the lower surface of the strip. Conversely, when the main component is applied to the lower surface of the strip, the hardener is applied to the upper surface of the strip.

The curing applicator 200 may face the main applicator 100 like this embodiment, or, may be provided at a position shifted by a predetermined distance along the path of the strip S from a first position facing the main applicator 100 like other embodiments described below.

As shown in FIG. 3 and FIG. 4, regions (the blanking region; B) where the main component 1 and hardener 2 are applied and separated by the strip are sequentially punched by the blanking punch 300 to form the laminas, the main component and hardener can be interposed at the interfaces of the laminas forming the laminated core.

The blanking punch 300 is elevatably provided at a position spaced apart from the main applicator (100) and the curing applicator (200) along the transfer direction of the strip to sequentially form the laminas by punching the blanking regions B.

The stacking die 400 is provided below the blanking punch 300 and includes a blanking die 410 facing the blanking punch 300, so that the laminated laminas sequentially formed by the blanking punch 300 can be input and stacked into the stacking die 400.

One of the main applicator 100 and curing applicator 200 is provided in an upper die 10 of the press die, and the other is provided at a lower die 20 of the press die. The blanking punch 300 is provided at the upper die 10, and the stacking die 400 is provided at the lower die 20. The upper die 10 is vertically movable, and the blanking punch 300 and the upper die 10 move integrally.

More particularly, the main applicator 100 and curing applicator 200 apply the main component and hardener to the blanking region of the strip S intermittently transferred in a space between the upper die 10 and the lower die 20 of the press die.

When the main applicator 100 applies the main component 1 to an upper surface of the blanking region, the curing applicator 200 applies the hardener 2 to a lower surface of the blanking region.

FIG. 2 shows a progressive die as an example of a laminated core manufacturing system including the main applicator 100 applying the main components to the upper surface of the strip at regular intervals, and the curing applicator 200 applying the hardeners to the lower surface of the strip at the same intervals as the main components.

The main applicator 100 and curing applicator 200 may apply the main component and the hardener in a spray method, or, when a plug closing an outlet of the main applicator 100 or the curing applicator 200 is pressed by the strip and the outlet opens, and the main component or the hardener can be applied to the surfaces of the strip. Since various adhesive applicators are known in this art, additional explanation on the method of applying the main component and the hardener is omitted.

The upper die 10 may include a movable press body 11 and a stripper 12. The stripper 12 presses the strip S downward when the upper die 10 descends, and separates the strip S from the blanking punch 410 when the upper die 10 ascends.

The main applicator 100 and the curing applicator 200 are provided upstream of the blanking punch 300, relative to the transfer direction of the strip S. The upper die 10 may further include a piercing punch 13 for forming slot, hole, or protrusion in the lamina L, and the lower die 20 may further include a piercing die 21 facing the piercing punch. In FIG. 2, reference numeral 14 represents an elastic member such as a spring that elastically supports the stripper 12.

According to this embodiment, when the strip S is intermittently transferred through the space between the upper die 10 and the lower die 20, the main applicator 100 applies the main component to the upper surface of the strip S, and the curing applicator 200 applies the hardener to the lower surface of the strip. For smooth reaction of the main component and the hardener at the interfaces of the laminas, it is preferable that application position of the main component at least partially overlaps with application position of the hardener. FIG. 3 shows an example that the main component and the hardener are applied to symmetric positions, with respect to the strip.

The stacking die 400 may further include a stacking guide such as a squeeze ring 420 provided under the blanking die 410 to align the laminas L, and a back pressure device may be provided under the stacking die 400 to support and lower the laminated core C discharged from the stacking die. The stacking die 400 may be rotatably provided in the lower die 20. The squeeze ring, the back pressure device, and the rotatable stacking die (rotary die) are known in this art, so further explanation on these elements is omitted.

The stacking die 400 makes the laminas L pass in a stacked state and forms the laminated core C. As shown in FIG. 4, the main component 1 and hardener 2 react at the interfaces of the laminas L forming the laminated core C.

Meanwhile, the application of the hardener to the lower surfaces of the blanking regions forming bottoms of the laminated cores may be omitted, and the application of the main component to the upper surfaces of the blanking regions forming top surfaces of the laminated cores may be omitted. That is, the main applicator 100 and curing applicator 200 may omit the application of the main component and hardener at predetermined times, for dividing the laminated cores C.

After the laminated core C is discharged from the stacking die 400, the laminated core is loaded into the core press 500. Before the two-component adhesive is fully cured by the reaction of the main component and the hardener, the laminated core C is taken out from the stacking die 400 and pressed by the core press 500. For example, the laminated core C can be loaded into the core press 500 within pot time of the two-component adhesive and pressed until the pot time ends. As a result, the quality such as squareness and parallelism of the laminated core can be improved by the core press 500.

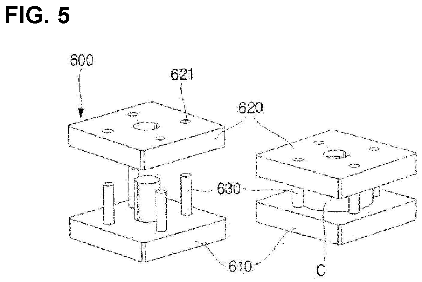

Referring to FIG. 5, the laminated core C is installed at a core jig 600 and then loaded into the core press 500.

The core jig 600 may include a core base 610, a cover 620, and a post 630 provided on the core base. The cover 620 may include a hole 621 into which the post 630 is inserted.

The core press 500 includes a lower body 510 and an upper press 520. The core base 610 is mounted on the lower body 510, and the upper press 520 applies pressure to the cover 620. The core press 500 can have the structure of a conventional press die, so additional explanation on the core press is omitted.

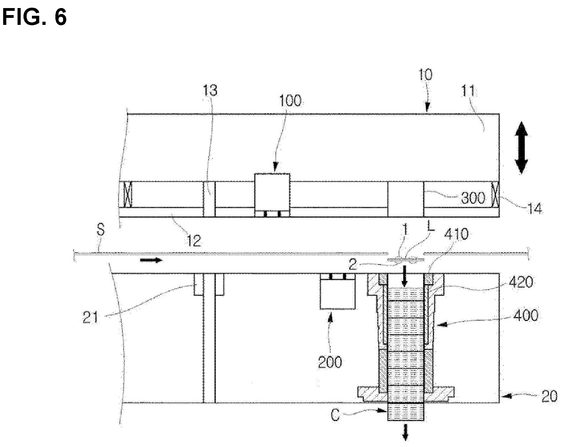

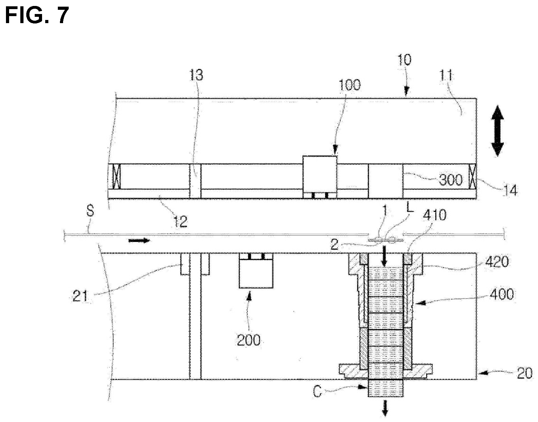

Next, with reference to FIGS. 6 and 7, additional embodiments (second and third embodiments) of the laminated core manufacturing system according to the present invention are described.

Referring to FIG. 6, the curing applicator 200 may be provided at a position shifted by a predetermined distance from the main applicator 100 along the transfer direction of the strip. Conversely, like the embodiment shown in FIG. 7, the main applicator 100 may be provided at a location shifted by a predetermined distance from the curing applicator 200 along the transfer direction of the strip.

According to the press die (progressive die) shown in FIG. 6, after the main component is applied first to the blanking region, followed by the application of the hardener. According to the press die shown in FIG. 7, the application of the main component follows the application of the hardener. The previous examples show the main applicator positioned above the strip and the curing applicator positioned below strip. However, as already mentioned in this specification, the main applicator may be positioned below the strip, and the curing applicator may be positioned above the strip.

As described above, the laminated core may be manufactured using a press die where the main component for the two-component adhesive is applied to one surface of the strip intermittently transferred, the hardener is applied to the other surface of the strip, and laminas are sequentially formed by blanking process.

The blanking process includes a step of blanking regions where the main component and hardener separated by the strip are applied for mixing the main component and hardener at the interface of the laminas, and a step of sequentially forming the laminas for stacking the laminas into a stacking. The main component may be applied to a position overlapping with a position of the hardener, in the press die such as the progressive die.

When the blanking process is performed, the application of the main component and the hardener can be carried out upstream of the blanking process stage, simultaneously with the blanking process. The laminated core discharged from the stacking die, can go through the pressing step performed by the core press, for improving the quality of the laminated core.

Although the preferred embodiments of the present invention have been disclosed for illustrative purposes, it should be understood by those skilled in the art that these embodiments are given by way of illustration only and the present invention is not limited thereto.

Therefore, various modifications, variations, and alterations can be made by those skilled in the art without departing from the spirit and scope of the present invention. And the scope of the invention should be limited only by the accompanying claims and equivalents thereof.

### [Industrial Applicability]

The present invention can be applicable to the manufacture of laminated cores and motors, etc. According to the present invention, the quality of the laminated core can be improved.

## Claims

1. A laminated core manufacturing system comprising:
a main applicator configured to apply a main component for a two-component adhesive to a first surface of a strip intermittently transferred;
a curing applicator configured to apply a hardener for the two-component adhesive to a second surface of the strip, and provided at a first position facing the main applicator or a second position shifted by a predetermined distance from the first position along the transfer direction of the strip;
a blanking punch elevatably provided at a location spaced from the main applicator and the curing applicator along the transfer direction of the strip, for sequentially forming laminas by blanking regions where the main component and hardener separated by the strip are applied;
a stacking die provided under the blanking punch for receiving and stacking the laminas formed sequentially by the blanking punch; and
a core press for applying pressure to a laminated core discharged from the stacking die.

2. The laminated core manufacturing system of claim 1, wherein one applicator of the main applicator and the curing applicator is provided at an upper die of a press die, and the other applicator is provided at a lower die of the press die, the blanking punch is provided at the upper die, and the stacking die is provided at the lower die.

3. A method for manufacturing a laminated core using a press die configured to apply a main component for a two-component adhesive to a first surface of a strip intermittently transferred and a hardener to a second surface of the strip, and to sequentially form laminas by blanking process:
wherein the blanking process includes blanking regions where the main component and hardener separated by the strip are applied for mixing the main component and hardener at the interface of the laminas, and sequentially forming the laminas for stacking the laminas into a stacking die.

4. The method of claim 3, wherein the main component is applied to a position overlapping with a position of the hardener.

5. The method of claim 3 or 4, further comprising;
pressing a laminated core discharged from the stacking die.
